# FASCICULE DE BREVET EUROPEEN

(11) **EP 1 547 923 B1**
(45) Date de publication et mention de la délivrance du brevet: **06.05.2009**
(21) Numéro de dépôt: 04293064.4
(22) Date de dépôt: 20.12.2004
(51) Int. Cl.: B64G 1/44, B64G 1/50

(54) **Dispositif de séquencement pour une structure déployable en fonction de la cinématique de l'un de ses corps mobiles**
Folgesteuerungsvorrichtung für eine entfaltbare Struktur mit Abhängigkeit von der Kinematik eines ihrer bewegbaren Körper
Sequencing device for a deployable structure according to the movement of one of its mobile bodies

(30) Priorité: 23.12.2003 FR 0315224
(43) Date de publication de la demande: 29.06.2005
(73) Titulaire: Alcatel Lucent, 75008 Paris (FR)
(72) Inventeur: Chaix, Rodolphe, 83390 Cuers (FR); Daval, Christian, Bât.Ondine 06210 Mandelieu (FR)
(74) Mandataire: Esselin, Sophie

(56) Documents cités:
- FR-A- 2 768 400
- FR-A- 2 781 454
- US-A- 5 909 860
- US-B1- 6 484 972

## Description

L'invention concerne le domaine des structures à corps déployables, et plus précisément les dispositifs de séquencement contrôlant au moins en partie le déploiement des corps mobiles de telles structures.

Certaines structures, comme par exemple dans le domaine spatial, font l'objet d'un déploiement lorsque les engins (ou plateformes), sur lesquels elles sont implantées, sont parvenus au niveau de leur lieu d'implantation (comme dans le cas d'un satellite d'observation ou de télécommunications), ou bien lorsqu'ils ont effectués une certaine partie de leur parcours ou mission (comme dans le cas d'un engin spatial). Ce déploiement s'effectue selon un ordre prédéfini, contrôlé par un dispositif dit « de séquencement ». Il s'agit par exemple de déployer des panneaux solaires d'un générateur solaire, et/ou des panneaux d'émission et/ou de réception d'une antenne de télécommunications, et/ou des panneaux d'un dispositif de transfert de chaleur.

Certains dispositifs de séquencement connus ne permettent le déplacement d'un corps d'une structure qu'une fois qu'un autre corps de cette même structure, auquel il est rattaché, a été déployé. Plus précisément, chaque articulation, rattachée à un premier corps à déployer qui est lui même rattaché à un second corps à déployer, est couplée à un dispositif de séquencement qui n'autorise le déploiement du second corps qu'une fois qu'elle est en position verrouillée, ou quasiment verrouillée.

Ce type de dispositif de séquencement ne permet donc pas d'initier le déploiement d'un corps si le déploiement du corps auquel il est rattaché n'est pas achevé, du fait qu'il nécessite d'avoir un état verrouillé du corps en déploiement et un élément donnant l'information de cet état verrouillé.

Le document US-B1-6 484 972 qui est considéré comme l'art antérieur le plus proche décrit un ensemble de panneaux de générateurs solaires à séquencement d'ouverture. Le document FR- A- 2 781 454 décrit un dispositif de retenue et de de mise en séquence de déploiement.

L'invention a donc pour but d'améliorer la situation, et notamment de permettre des libérations de cinématiques pour des étapes intermédiaires de déploiement, ou de permettre des libérations avec des dispositifs de déploiement (articulations) qui ne disposent pas d'indication d'état de verrouillage, mais également de permettre des libérations en fin de déploiement.

Elle propose à cet effet un dispositif de séquencement pour une structure déployable selon la revendication 1 ou la revendication 2.

Le dispositif selon l'invention peut comporter d'autres caractéristiques selon la revendication 3.

L'invention propose également une structure déployable équipée au moins i) d'un premier corps, ii) d'un deuxième corps mobile par rapport au premier corps, iii) d'un troisième corps mobile par rapport à l'un des premier et deuxième corps et placé, lorsque la structure est en position au moins partiellement repliée, contre ou entre les premier et deuxième corps, et iv) d'au moins un dispositif de séquencement du type de celui présenté ci-avant.

Dans une telle structure, la partie de cinématique choisie du deuxième corps peut être constituée soit d'au moins une rotation pure sur un secteur angulaire choisi, soit d'au moins une translation pure sur une distance choisie, soit encore d'une combinaison d'au moins une rotation pure sur un secteur angulaire choisi et d'au moins une translation pure sur une distance choisie.

Par ailleurs, l'un au moins des corps peut constituer au moins une partie d'une antenne de télécommunications et/ou au moins une partie d'un générateur solaire et/ou au moins une partie d'un dispositif de transfert de chaleur.

L'invention est particulièrement bien adaptée, bien que de façon non exclusive, aux engins spatiaux et plateformes spatiales équipés d'au moins une structure déployable du type de celle présentée ci-avant.

D'autres caractéristiques et avantages de l'invention apparaîtront à l'examen de la description détaillée ci-après, et des dessins annexés, sur lesquels :
- les figures 1A à 1C illustrent respectivement trois états d'un premier exemple de réalisation d'un dispositif de séquencement selon l'invention,
- les figures 2A à 2C illustrent respectivement trois états d'un deuxième exemple de réalisation d'un dispositif de séquencement selon l'invention,
- la figure 3 illustre un troisième exemple de réalisation d'un dispositif de séquencement selon l'invention,
- la figure 4 illustre un quatrième exemple de réalisation d'un dispositif de séquencement selon l'invention,
- la figure 5 illustre un cinquième exemple de réalisation d'un dispositif de séquencement selon l'invention,
- les figures 6A et 6B illustrent respectivement, de façon schématique, deux phases de déploiement de panneaux d'un premier exemple de structure déployable, mettant en oeuvre un unique dispositif de séquencement selon l'invention,
- les figures 7A et 7B illustrent respectivement, de façon schématique, deux phases de déploiement de panneaux d'un deuxième exemple de structure déployable, mettant en oeuvre un unique dispositif de séquencement selon l'invention,
- les figures 8A et 8B illustrent respectivement, de façon schématique, deux phases de déploiement de panneaux d'un troisième exemple de structure déployable, mettant en oeuvre un unique dispositif de séquencement selon l'invention,
- les figures 9A et 9B illustrent respectivement, de façon schématique, deux phases de déploiement de panneaux d'un quatrième exemple de structure déployable, mettant en oeuvre un unique dispositif de séquencement selon l'invention,
- les figures 10A à 10C illustrent respectivement, de façon schématique, trois phases de déploiement de panneaux d'un cinquième exemple de structure déployable, mettant en oeuvre deux dispositifs de séquencement selon l'invention, et
- les figures 11A à 11C illustrent respectivement, de façon schématique, trois phases de déploiement de panneaux d'un sixième exemple de structure déployable, mettant en oeuvre deux dispositifs de séquencement selon l'invention.

Les dessins annexés pourront non seulement servir à compléter l'invention, mais aussi contribuer à sa définition, le cas échéant.

L'invention a pour objet de permettre un déploiement optimisé d'une structure comprenant au moins deux corps à déployer, et par exemple implantée sur une plateforme spatiale ou un engin spatial.

Dans ce qui suit, on considèrera que les corps à déployer sont des panneaux constituant, par exemple, une partie au moins d'un générateur solaire. Mais, l'invention n'est pas limitée à ce type de panneau. Elle concerne également les panneaux constituant, par exemple, une partie au moins d'une antenne de télécommunications ou d'un dispositif de transfert de chaleur (comme par exemple des calorstats couplés à des radiateurs passifs), ainsi que toutes les combinaisons de parties de générateur solaire et/ou d'antenne de télécommunications et/ou de dispositif de transfert de chaleur. D'une manière plus générale, l'invention concerne tout type de corps à déployer de façon séquentielle, et notamment les panneaux.

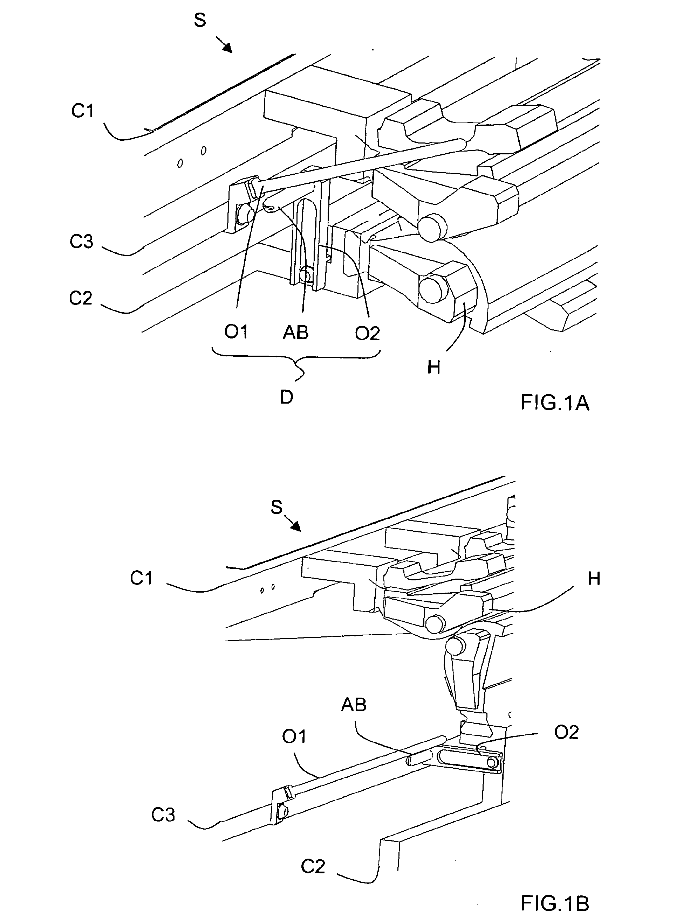

On se réfère tout d'abord aux figures 1A à 1C pour décrire un premier exemple de réalisation d'un dispositif de séquencement selon l'invention.

La structure S, partiellement illustrée sur les figures 1A à 1C, comprend un premier corps C1, constituant, par exemple, le panneau d'un mat central d'un satellite, un deuxième corps C2, monté mobile par rapport au premier corps C1 grâce à une articulation H et constituant un autre panneau, et un troisième corps C3 monté mobile par rapport au deuxième corps C2 grâce à une autre articulation (non représentée) et constituant encore un autre panneau.

Comme illustré sur la figure 1A, dans l'état replié de la structure S, qui constitue son état initial, les trois corps C1 à C3 sont sensiblement parallèles les uns aux autres, le troisième corps C3 étant intercalé entre les premier C1 et deuxième C2 corps.

La structure S est par ailleurs équipée d'un dispositif de séquencement D comprenant un premier organe O1, monté fixement sur le troisième corps C3, et un deuxième organe O2 monté sur le deuxième corps C2 et coopérant avec le premier organe O1.

Plus précisément, le premier organe O1 est chargé d'interdire le déploiement du troisième corps C3 tant qu'il est maintenu dans une position de blocage, et le deuxième organe O2 est chargé de bloquer le premier organe O1 tant que le deuxième corps C2 n'a pas effectué une partie choisie d'une cinématique destinée à l'entraîner d'une position initiale vers une position finale.

On entend ici par « cinématique » une trajectoire pouvant être composée soit d'une rotation pure sur un secteur angulaire choisi, soit d'une translation pure sur une distance choisie, soit encore d'une combinaison d'au moins une rotation pure sur un secteur angulaire choisi et d'au moins une translation pure sur une distance choisie.

Dans cet exemple de réalisation on considère, à titre d'exemple illustratif, que la cinématique du deuxième corps C2 est une rotation pure, par exemple sur 180°, destinée à le placer en position finale dans le prolongement du premier corps C1 (sensiblement dans un même plan). Par conséquent, la partie choisie de la cinématique du deuxième corps C2 est un secteur angulaire, par exemple égal à 95°.

Le dispositif de séquencement D est donc ici chargé d'autoriser le déploiement du troisième corps C3 lorsque le deuxième corps C2 a effectué une partie de sa rotation complète de 180°, à savoir une rotation de 95°. En d'autres termes, le troisième corps C3 est autorisé à se déployer alors même que le déploiement du deuxième corps C2 n'est pas terminé.

Dans l'exemple illustré, le premier organe O1 est réalisé sous la forme d'un axe de longueur choisie, s'étendant obliquement dans le prolongement du troisième corps C3 (initialement du côté de l'articulation H). Par ailleurs, le deuxième organe O2 est ici réalisé sous la forme d'un bras monté sensiblement perpendiculairement au deuxième corps C2 et comportant au niveau de sa partie terminale PT un axe de blocage AB monté de façon sensiblement perpendiculaire.

Le premier organe (ou doigt) O1 est ainsi sensiblement perpendiculaire au deuxième organe O2 et initialement placé au dessous de celui-ci de manière à le bloquer. Plus précisément, le doigt O1 étant bloqué par l'axe AB du bras O2, il interdit au troisième corps C3 d'effectuer sa cinématique personnelle (par exemple une rotation d'environ 180°).

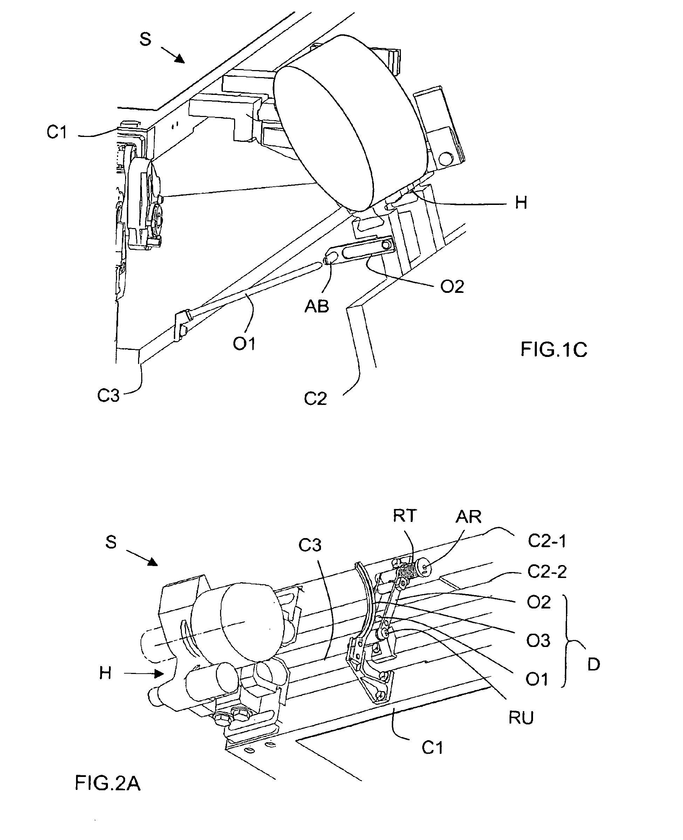

Tant que le deuxième corps C2 n'a pas effectué une rotation de 95°, le doigt O1 glisse sur l'axe AB, comme illustré sur l'état intermédiaire de la figure 1B, et empêche la rotation du troisième corps C3. La longueur du doigt O1 est donc choisie de manière à lui permettre de demeurer au dessus de l'axe AB pendant les 95 premiers degrés de rotation du deuxième corps C2. Au delà de ces 95°, le doigt O1 n'est plus retenu par l'axe AB, comme illustré sur la figure 1C, permettant ainsi le déploiement du troisième corps C3.

L'angle de libération (ici égal à 95°) est l'angle limite à partir duquel le troisième corps C3 peut se déployer sans risquer de heurter le premier corps C1, et sans gêner le deuxième corps C2 pendant la phase terminale de sa cinématique.

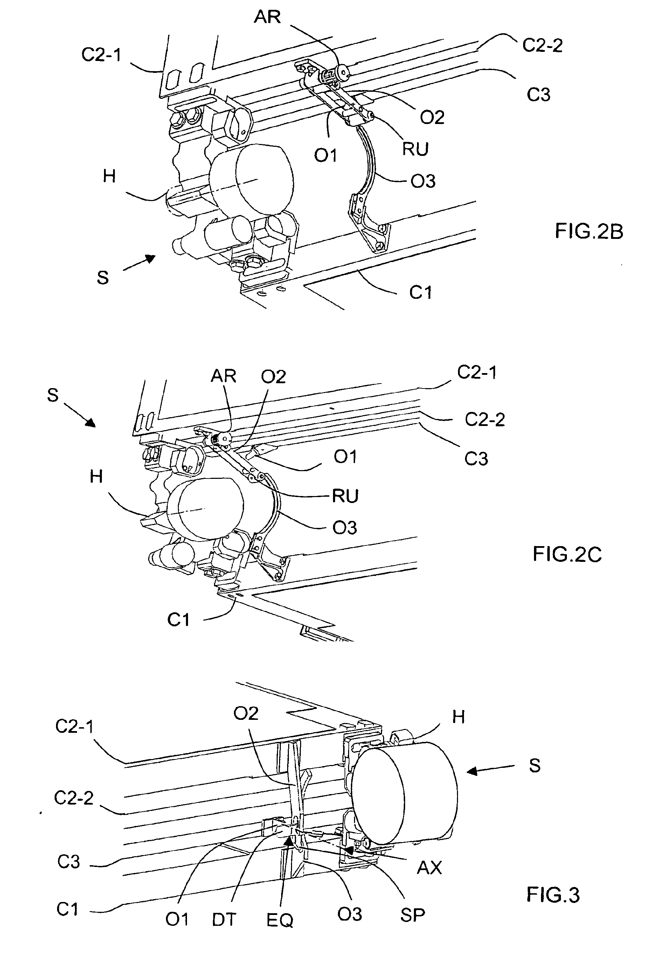

On se réfère maintenant aux figures 2A à 2C pour décrire un deuxième exemple de réalisation d'un dispositif de séquencement selon l'invention.

La structure S, partiellement illustrée sur les figures 2A à 2C, comprend toujours un premier corps C1, constituant, par exemple, le panneau d'un mat central d'un satellite, un deuxième corps C2-1, monté mobile par rapport au premier corps C1 grâce à une articulation H et constituant un autre panneau, un troisième corps C3 monté mobile par rapport au deuxième corps C2-1 grâce à une autre articulation (non représentée) et constituant encore un autre panneau, et un quatrième corps C2-2 monté mobile par rapport au deuxième corps C2-1 grâce à une autre articulation (non représentée) et constituant encore un autre panneau.

Comme illustré sur la figure 2A, dans l'état replié de la structure S, qui constitue son état initial, les quatre corps C1 à C3 sont sensiblement parallèles les uns aux autres, le troisième corps C3 étant intercalé entre les premier C1 et deuxième C2-1 corps, et plus précisément entre les premier C1 et quatrième C2-2 corps.

La structure S est par ailleurs équipée d'un dispositif de séquencement D comprenant un premier organe O1, monté fixement sur le troisième corps C3, un deuxième organe O2 monté sur le deuxième corps C2-1 et coopérant avec le premier organe O1, et un troisième organe O3 monté fixement sur le premier corps C1 et coopérant avec le deuxième organe O2.

Plus précisément, le premier organe O1 est chargé d'interdire le déploiement du troisième corps C3 tant qu'il est maintenu dans une position de blocage. Le deuxième organe O2 est chargé de bloquer le premier organe O1 tant que le deuxième corps C2-1 n'a pas effectué une partie choisie d'une cinématique destinée à l'entraîner d'une position initiale vers une position finale. Le troisième organe O3 est chargé de bloquer le deuxième organe O2 tant que le deuxième corps C2-1 n'a pas effectué la partie de cinématique choisie.

Dans cet exemple de réalisation on considère, à titre d'exemple illustratif, que la cinématique du deuxième corps C2-1 est une rotation pure, par exemple sur 180°, destinée à le placer en position finale dans le prolongement du premier corps C1 (sensiblement dans un même plan). Par conséquent, la partie choisie de la cinématique du deuxième corps C2-1 est un secteur angulaire, par exemple égal à 95°. Bien entendu, comme indiqué dans l'exemple précédent, la cinématique pourrait être différente d'une pure rotation, comme par exemple une translation éventuellement combinée à une rotation.

Le dispositif de séquencement D est donc ici chargé d'autoriser le déploiement des troisième C3 et quatrième C2-2 corps lorsque le deuxième corps C2-1 a effectué une partie de sa rotation complète de 180°, à savoir une rotation de 95°. En d'autres termes, les troisième C3 et quatrième C2-2 corps sont autorisés à se déployer alors même que le déploiement du deuxième corps C2-1 n'est pas forcément terminé.

Dans l'exemple illustré, le premier organe O1 est réalisé sous la forme d'un axe de faible extension, s'étendant obliquement dans le prolongement du troisième corps C3 (initialement du côté de l'articulation H).

Par ailleurs, le deuxième organe O2 est ici réalisé sous la forme d'un bras monté à rotation sur le deuxième corps C2-1. Il est plus précisément constitué d'un assemblage de deux barres munies d'extrémités raccordées deux à deux, d'un côté par un axe de rotation AR solidarisé à un ressort RT imprimant une force de rappel et solidarisé au deuxième corps C2-1, et du côté opposé par un rouleau (ou cylindre) RU monté à rotation. Les deux barres, le rouleau RU et l'axe de rotation AR délimitent un espace central vide destiné à recevoir le doigt O1 tant que le deuxième corps C2-1 n'a pas atteint sa position limite déclenchant la libération des troisième C3 et quatrième C2-2 corps.

En outre, le troisième organe O3 est ici réalisé sous la forme d'une came dont le profil inférieur reproduit au moins partiellement la partie de cinématique choisie du deuxième corps C2-1, entre sa position initiale et sa position limite.

Comme cela est illustré sur la figure 2A, en position repliée de la structure S, le deuxième organe O2 est placé sous la came O3. Plus précisément, son rouleau RU est contraint par le ressort RT à s'appuyer contre la partie inférieure de la came O3. Le doigt O1 est ainsi bloqué à l'intérieur de l'espace central vide défini dans le deuxième organe O2, ce qui interdit au troisième corps C3 d'effectuer sa cinématique personnelle (par exemple une rotation d'environ 180°).

Tant que le deuxième corps C2-1 n'a pas effectué une rotation de 95° (définissant la position limite illustrée sur la figure 2B), le deuxième organe O2 est contraint de remonter le long de la came O3 (son rouleau RU s'appuyant contre la face inférieure de la came O3 en limitant les frottements) tout en retenant bloqué le doigt O1, empêchant ainsi la rotation du troisième corps C3. Au delà de ces 95°, comme illustré sur la figure 1C, le profil de la came O3 s'arrête ce qui libère la partie avant du deuxième organe O2 (comportant le rouleau RU). Le ressort RT contraint alors le deuxième organe O2 à effectuer une rotation qui libère le doigt O1, permettant alors au troisième corps C3 de se déployer.

L'angle de libération (ici égal à 95°) est ici l'angle à partir duquel le troisième corps C3 peut se déployer sans risquer de heurter le premier corps C1, et sans gêner le deuxième corps C2-1 pendant la phase terminale de sa cinématique.

On se réfère maintenant à la figure 3 pour décrire un troisième exemple de réalisation d'un dispositif de séquencement selon l'invention. Cet exemple est une première variante du deuxième exemple de réalisation décrit ci-avant en référence aux figures 2A à 2C.

Dans cette première variante, le troisième organe O3 se présente sous la forme d'une came fixe dont le profil latéral reproduit au moins partiellement la partie de cinématique choisie du deuxième corps C2-1, entre sa position initiale et sa position limite.

Le premier organe O1 se présente sous la forme d'un doigt (ou patte) monté fixement, par l'intermédiaire d'un support, à une extrémité du troisième corps C3 et sensiblement parallèlement à ce dernier.

Par ailleurs, le deuxième organe O2 se présente sous la forme d'un bras monté fixement sur le deuxième corps C2-1, et possédant une partie d'extrémité munie d'une gorge G dans laquelle est montée à rotation autour d'un axe AX une équerre EQ. Une première partie SP de l'équerre EQ est pourvue d'une extrémité, de préférence sphérique, destinée à s'appuyer contre la surface latérale de la came O3 ,et une seconde partie DT de ladite équerre EQ, sensiblement perpendiculaire à la première SP, coopère avec le doigt O1.

Comme cela est illustré sur la figure 3, en position repliée de la structure S, l'extrémité sphérique de la première partie SP de l'équerre EQ s'appuie contre le profil latéral de la came O3, tandis que la seconde partie DT est retenue par l'extrémité du doigt O1. La rotation de l'équerre EQ étant empêchée, le doigt O1 est donc bloqué, ce qui empêche le troisième corps C3 d'effectuer sa cinématique personnelle (par exemple une rotation d'environ 180°).

Tant que le deuxième corps C2-1 n'a pas effectué une rotation, par exemple de 95° (définissant sa position limite), la première partie SP de l'équerre EQ est contrainte de glisser le long de la came O3 tandis que la seconde partie DT demeure bloquée par le doigt O1, empêchant ainsi la rotation du troisième corps C3. Au delà de ces 95°, le profil de la came O3 s'arrête ce qui permet de libérer la première partie SP de l'équerre EQ. L'équerre EQ pouvant alors tourner, sa seconde partie DT libère le doigt O1, permettant ainsi au troisième corps C3 de se déployer.

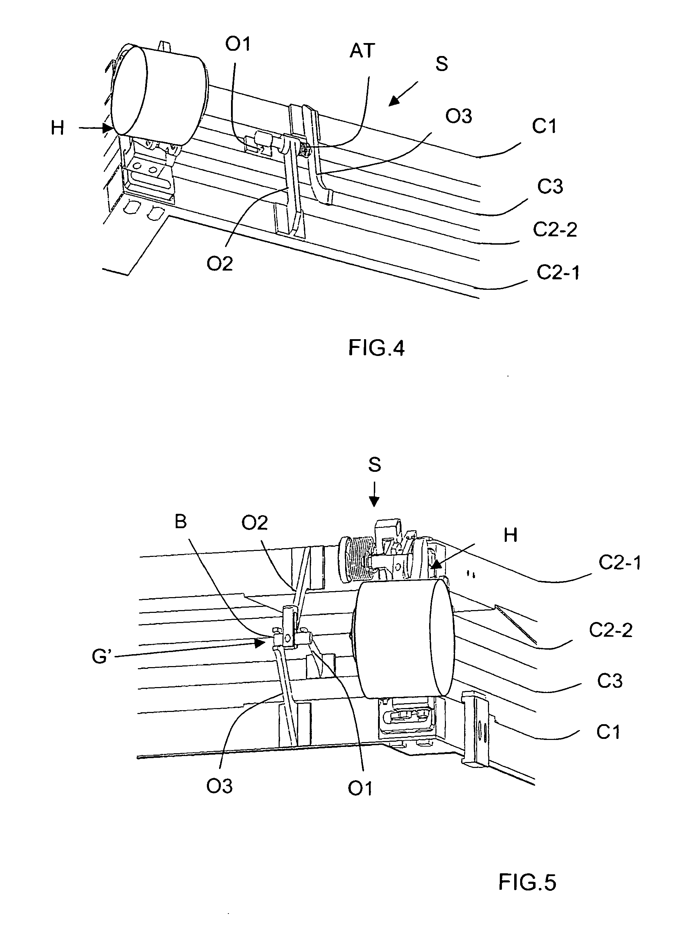

On se réfère maintenant à la figure 4 pour décrire un quatrième exemple de réalisation d'un dispositif de séquencement selon l'invention. Cet exemple est une deuxième variante du deuxième exemple de réalisation décrit ci-avant en référence aux figures 2A à 2C.

Dans cette deuxième variante, le troisième organe O3 se présente sous la forme d'une came fixe dont le profil latéral reproduit au moins partiellement la partie de cinématique choisie du deuxième corps C2-1, entre sa position initiale et sa position limite.

Le premier organe O1 se présente sous la forme d'un cran ou doigt monté fixement à une extrémité du troisième corps C3 et sensiblement dans le prolongement de ce dernier.

Par ailleurs, le deuxième organe O2 se présente sous la forme d'un bras monté fixement sur le deuxième corps C2-1, dans un plan sensiblement perpendiculaire à ce dernier, et dont la partie terminale (opposée à la fixation) comporte un axe AT. Cet axe AT est monté en translation sensiblement perpendiculairement au bras O2 et au doigt O1. Il comprend une première partie d'extrémité propre à bloquer le doigt O1 et une seconde partie d'extrémité, opposée à la première et pourvue d'un ressort RT' générant une force de rappel. La seconde partie d'extrémité est destinée à s'appuyer, sous la contrainte du ressort RT', contre le profil latéral de la came O3.

Comme cela est illustré sur la figure 4, en position repliée de la structure S, le profil latéral de la came O3 interdit toute translation de l'axe AT du deuxième organe O2. Le doigt O1 étant bloqué par la première partie d'extrémité de l'axe AT, le troisième corps C3 ne peut pas effectuer sa cinématique personnelle (par exemple une rotation d'environ 180°).

Tant que le deuxième corps C2-1 n'a pas effectué une rotation, par exemple de 95° (définissant sa position limite), l'axe AT du deuxième organe O2 est contraint de glisser le long de la came O3 (sa seconde partie d'extrémité s'appuyant contre le profil latéral de la came O3), bloquant ainsi le doigt O1 et empêchant la rotation du troisième corps C3. Au delà de ces 95°, le profil de la came O3 s'arrête ce qui permet à l'axe AT de se translater sous l'action du ressort RT', dans une direction opposée au doigt O1. La translation libérant le doigt O1, le troisième corps C3 peut alors se déployer.

On se réfère maintenant à la figure 5 pour décrire un quatrième exemple de réalisation d'un dispositif de séquencement selon l'invention. Cet exemple est une troisième variante du deuxième exemple de réalisation décrit ci-avant en référence aux figures 2A à 2C.

Dans cette troisième variante, le troisième organe O3 se présente sous la forme d'un bras monté fixement sur le premier corps C1, dans un plan sensiblement perpendiculaire à ce dernier et de façon très oblique en direction des deuxième C2-1 et troisième C3 corps, et comportant une partie terminale (opposée à la fixation) munie d'une gorge G'.

Le premier organe O1 se présente sous la forme d'un doigt monté fixement à une extrémité du troisième corps C3 et sensiblement dans le prolongement de ce dernier de préférence de façon très légèrement oblique.

La gorge G' du troisième organe O3 et l'extrémité du doigt O1 sont placées sensiblement à un même niveau et espacées d'une distance choisie.

Par ailleurs, le deuxième organe O2 se présente sous la forme d'un bras monté fixement sur le deuxième corps C2-1, dans un plan sensiblement perpendiculaire à ce dernier, et dont la partie terminale (opposée à la fixation) est destinée à être initialement intercalée sensiblement entre la gorge G' du troisième organe O3 et l'extrémité du doigt O1. Cette partie terminale est pourvue d'une barre B montée à rotation, et de préférence légèrement aplatie. Cette barre B présente deux parties d'extrémité libres, une première extrémité étant destinée à être logée dans la gorge G' du troisième organe O3 et une seconde extrémité étant destinée à bloquer l'extrémité du doigt O1.

Comme cela est illustré sur la figure 5, en position repliée de la structure S, la première extrémité de la barre B du deuxième organe 02 est immobilisée dans la gorge G' du troisième organe 03, si bien que la barre B ne peut pas tourner et bloque le doigt 01, empêchant ainsi le troisième corps C3 d'effectuer sa cinématique personnelle (par exemple une rotation d'environ 180°).

Tant que le deuxième corps C2-1 n'a pas effectué une rotation, par exemple de 95° (définissant sa position limite), la barre B du deuxième organe 02 interdit tout mouvement au doigt O1 et donc toute rotation du troisième corps C3. Au delà de ces 95°, la première extrémité de la barre B sort de la gorge G' du troisième organe O3, si bien que la barre B peut tourner autour de son axe de rotation libérant ainsi le doigt O1 et permettant au troisième corps C3 de se déployer.

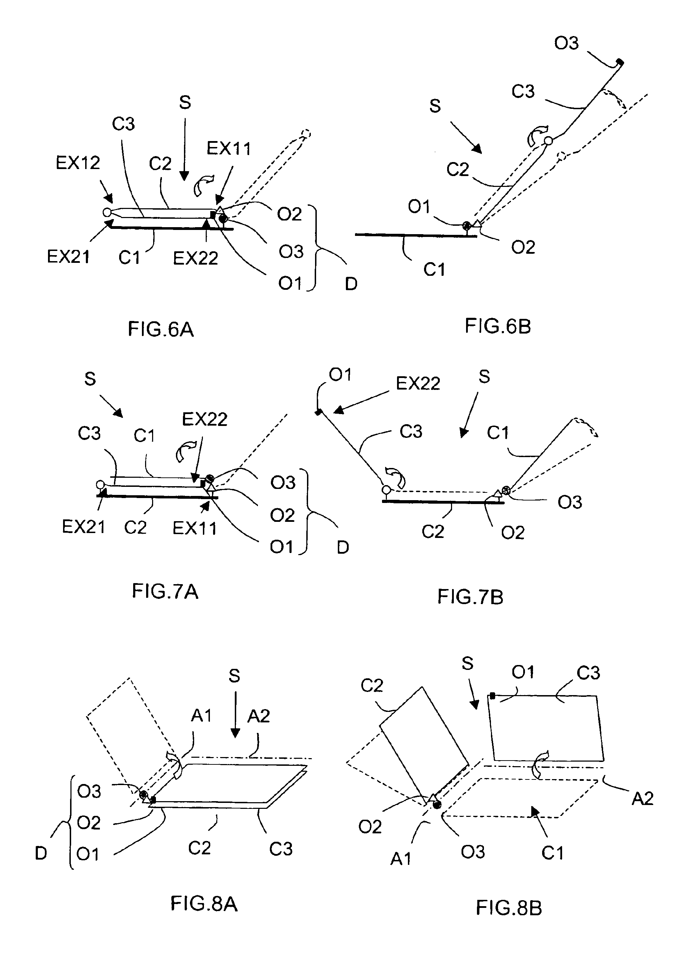

Les séquencements contrôlés par des dispositifs selon l'invention D peuvent concerner de très nombreuses situations schématiquement illustrées, pour certaines d'entre elles, sur les figures 6 à 11.

Plus précisément, le séquencement illustré sur les figures 6A et 6B concerne une structure S comprenant un premier corps (ou panneau) fixe C1, un deuxième corps (ou panneau) C2 monté mobile sur le premier corps C1 grâce à une articulation installée en partie sur une première extrémité EX11, et un troisième corps C3 monté mobile sur le deuxième corps C2 grâce à une articulation installée sur une première extrémité EX21 et sur une seconde extrémité EX12 du deuxième corps, opposée à sa première EX11. Les premier C1, deuxième C2 et troisième C3 corps sont ici sensiblement parallèles entre eux, le troisième corps C3 étant initialement intercalé entre les premier C1 et deuxième C2 corps.

Le dispositif de séquencement selon l'invention D comprend ici, d'une première part, un premier organe O1 (matérialisé par un rectangle noir et par exemple agencé sous la forme d'un doigt), monté sur une seconde extrémité EX22 du troisième corps C3, opposée à sa première extrémité EX21, d'une deuxième part, un deuxième organe O2 (matérialisé par un triangle gris clair et par exemple agencé sous la forme d'un bras), monté sur la première extrémité EX11 du deuxième corps C2, et d'une troisième part, un troisième organe O3 (matérialisé par un rond gris foncé et par exemple agencé sous la forme d'une came), monté fixement sur le premier corps C1.

Sur la figure 6A, les pointillés matérialisent la position limite au-delà de laquelle le troisième organe O3 libère le deuxième organe O2 qui libère à son tour le premier organe 01.

Sur la figure 6B, les traits pleins matérialisent le déploiement du troisième corps C3, une fois que le deuxième corps C2 a dépassé sa position limite, et les pointillés matérialisent la position finale (déployée) de la structure S. Comme on peut le constater, dans cet exemple le deuxième corps C2 poursuit sa course (ou trajectoire ou cinématique) sur un petit secteur angulaire (typiquement 15°), après avoir atteint sa position limite.

Le séquencement illustré sur les figures 7A et 7B est destiné à montrer le caractère relatif des mouvements d'un corps par rapport à un autre.

Ce séquencement concerne une structure S comprenant un premier corps (ou panneau) C1, un deuxième corps (ou panneau) C2 monté mobile par rapport au premier corps C1 grâce à une articulation installée en partie sur une première extrémité EX11, et un troisième corps C3 monté mobile sur le deuxième corps C2 grâce à une articulation installée en partie sur une première extrémité EX21. Les premier C1, deuxième C2 et troisième C3 corps sont ici sensiblement parallèles entre eux, le troisième corps C3 étant initialement intercalé entre les premier C1 et deuxième C2 corps.

Le dispositif de séquencement selon l'invention D comprend ici, d'une première part, un premier organe 01 (matérialisé par un rectangle noir et par exemple agencé sous la forme d'un doigt), monté sur une seconde extrémité EX22 du troisième corps C3, opposée à sa première extrémité EX21, d'une deuxième part, un deuxième organe 02 (matérialisé par un triangle gris clair et par exemple agencé sous la forme d'un bras), monté sur la première extrémité EX11 du deuxième corps C2, et d'une troisième part, un troisième organe O3 (matérialisé par un rond gris foncé et par exemple agencé sous la forme d'une came), monté fixement sur le premier corps C1.

Ici, le référentiel fixe est placé sur le deuxième corps C2 qui est donc « fixe ». On peut noter qu'en déplaçant le référentiel fixe sur le premier corps C1 on obtient l'agencement de la figure 6, ce qui montre le caractère relatif des mouvements des corps les uns par rapport aux autres. En d'autres termes, il est équivalent selon l'invention de déplacer le deuxième corps par rapport au premier corps, lorsque ce dernier est fixe, et de déplacer le premier corps par rapport au deuxième corps, lorsque ce dernier est fixe (comme c'est le cas dans l'exemple des figures 7A et 7B).

Sur la figure 7A, les pointillés matérialisent la position limite (relative) au-delà de laquelle le troisième organe 03 libère le deuxième organe 02 qui libère à son tour le premier organe 01.

Tant que le deuxième corps C2 n'a pas atteint sa position limite par rapport au premier corps C1 (ici c'est en fait le premier corps C1 qui s'écarte du deuxième corps C2), le troisième corps C3 demeure sensiblement immobile par rapport au deuxième corps C2.

Puis, une fois que le premier corps C1 a atteint la position matérialisée par le trait plein de droite sur la figure 7B, qui correspond à la position limite du deuxième corps C2, le troisième corps C3 est libéré et peut se déployer pour rejoindre sa position finale (matérialisée par le trait plein de gauche sur la figure 7B), et dans le même temps le premier corps C1 poursuit sa course (ou trajectoire ou cinématique) vers sa position finale (matérialisée par les pointillés à droite sur la figure 7B), qui définit la position finale du deuxième corps C2 par rapport à lui.

Une alternative à cette cinématique consiste à supprimer la came O3 et à utiliser un long doigt 01, fixe sur C3, ce qui ramène à l'agencement décrit précédemment en référence aux figures 1A à 1C.

Le séquencement illustré sur les figures 8A et 8B concerne une structure S comprenant un premier corps (ou panneau) C1, un deuxième corps (ou panneau) C2 monté mobile sur le premier corps C1 grâce à une articulation installée sur un premier axe de rotation A1, et un troisième corps C3 monté mobile sur le premier corps C1 grâce à une articulation installée sur un second axe de rotation A2, sensiblement perpendiculaire au premier axe A1. Les premier C1, deuxième C2 et troisième C3 corps sont ici sensiblement parallèles entre eux, le troisième corps C3 étant initialement intercalé entre les premier C1 et deuxième C2 corps. Le premier corps (ou panneau) C1 est ici fixe, mais comme dans l'exemple précédent le deuxième corps pourrait être fixe à la place du premier.

Le dispositif de séquencement selon l'invention D comprend ici, d'une première part, un premier organe 01 (matérialisé par un rectangle noir et par exemple agencé sous la forme d'un doigt), monté sur le troisième corps C3, d'une deuxième part, un deuxième organe 02 (matérialisé par un triangle gris clair et par exemple agencé sous la forme d'un bras), monté sur le deuxième corps C2, et d'une troisième part, un troisième organe 03 (matérialisé par un rond gris foncé et par exemple agencé sous la forme d'une came), monté fixement sur le premier corps C1.

Dans cet exemple, le troisième corps C3 demeure sensiblement immobile par rapport au premier corps C1 tant que le deuxième corps C2 n'a pas atteint sa position limite matérialisée en pointillés sur la figure 8A et en traits pleins sur la figure 8B. Une fois celle-ci atteinte, le troisième organe 03 libère le deuxième organe 02 qui libère à son tour le premier organe 01. Le troisième corps C3 est alors libéré et peut se déployer pour rejoindre sa position finale (matérialisée par les traits pleins de droite sur la figure 8B), et dans le même temps le deuxième corps C2 poursuit sa course (ou trajectoire ou cinématique) vers sa position finale (matérialisée par les pointillés à gauche sur la figure 8B).

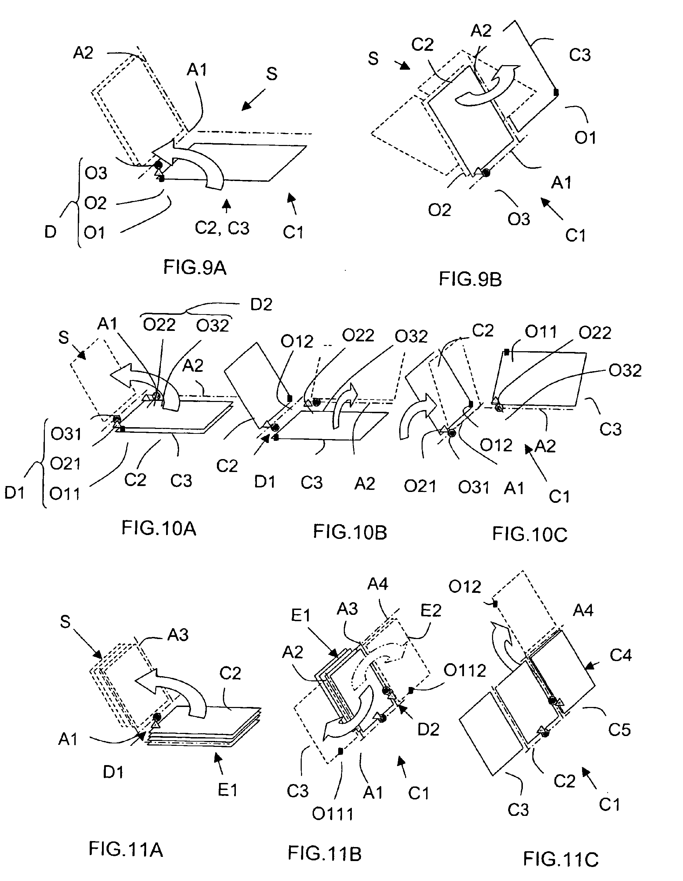

Le séquencement illustré sur les figures 9A et 9B concerne une structure S comprenant un premier corps (ou panneau) fixe C1, un deuxième corps (ou panneau) C2 monté mobile sur le premier corps C1 grâce à une articulation installée sur un premier axe de rotation A1, et un troisième corps C3 monté mobile sur le deuxième corps C2 grâce à une articulation installée sur un second axe de rotation A2, sensiblement perpendiculaire au premier axe A1. Les premier C1, deuxième C2 et troisième C3 corps sont ici sensiblement parallèles entre eux, le troisième corps C3 étant initialement intercalé entre les premier C1 et deuxième C2 corps.

Le dispositif de séquencement selon l'invention D comprend ici, d'une première part, un premier organe 01 (matérialisé par un rectangle noir et par exemple agencé sous la forme d'un doigt), monté sur le troisième corps C3, d'une deuxième part, un deuxième organe 02 (matérialisé par un triangle gris clair et par exemple agencé sous la forme d'un bras), monté sur le deuxième corps C2, et d'une troisième part, un troisième organe 03 (matérialisé par un rond gris foncé et par exemple agencé sous la forme d'une came), monté fixement sur le premier corps C1 au niveau du premier axe de rotation A1.

Dans cet exemple, le troisième corps C3 suit la trajectoire (ou cinématique) du deuxième corps C2 tant que celui-ci n'a pas atteint sa position limite matérialisée en pointillés sur la figure 9A et en trait plein sur la figure 9B. Une fois celle-ci atteinte, le troisième organe O3 libère le deuxième organe O2 qui libère à son tour le premier organe O1. Le troisième corps C3 est alors libéré et peut se déployer pour rejoindre sa position finale (matérialisée par les traits pleins de droite sur la figure 9B), à côté du deuxième corps C2, et dans le même temps le deuxième corps C2 poursuit sa course (ou trajectoire ou cinématique) vers sa position finale (matérialisée par les pointillés à gauche sur la figure 9B), en entraînant avec lui le troisième corps C3.

Le séquencement illustré sur les figures 10A à 10C concerne une structure S comprenant un premier corps (ou panneau) fixe C1, un deuxième corps (ou panneau) C2 monté mobile sur le premier corps C1 grâce à une articulation installée sur un premier axe de rotation A1, et un troisième corps C3 monté mobile sur le premier corps C1 grâce à une articulation installée sur un second axe de rotation A2, sensiblement perpendiculaire au premier axe A1. Les premier C1, deuxième C2 et troisième C3 corps sont ici sensiblement parallèles entre eux, le troisième corps C3 étant initialement intercalé entre les premier C1 et deuxième C2 corps.

La structure S est ici équipée de deux dispositifs de séquencement selon l'invention D1 et D2.

Le premier dispositif de séquencement D1 comprend ici, d'une première part, un premier organe O11 (matérialisé par un rectangle noir et par exemple agencé sous la forme d'un doigt), monté sur le troisième corps C3, d'une deuxième part, un deuxième organe O21 (matérialisé par un triangle gris clair et par exemple agencé sous la forme d'un bras), monté sur le deuxième corps C2, et d'une troisième part, un troisième organe O31 (matérialisé par un rond gris foncé et par exemple agencé sous la forme d'une came), monté fixement sur le premier corps C1 au niveau du premier axe de rotation A1.

Le second dispositif de séquencement D2 comprend ici, d'une première part, un premier organe O12 (matérialisé par un rectangle noir et par exemple agencé sous la forme d'un doigt), monté sur le deuxième corps C2, d'une deuxième part, un deuxième organe 022 (matérialisé par un triangle gris clair et par exemple agencé sous la forme d'un bras), monté sur le troisième corps C3, et d'une troisième part, un troisième organe 032 (matérialisé par un rond gris foncé et par exemple agencé sous la forme d'une came), monté fixement sur le premier corps C1 au niveau du second axe de rotation A2.

Dans cet exemple, le premier dispositif de séquencement D1 contrôle le déclenchement du déploiement du troisième corps C3, tandis que le second dispositif de séquencement D2 contrôle le déclenchement du déploiement final du deuxième corps C2.

Plus précisément, le troisième corps C3 demeure sensiblement immobile par rapport au premier corps C1 tant que le deuxième corps C2 n'a pas atteint sa position limite matérialisée en pointillés sur la figure 10A et en traits pleins sur les figures 10B et 10C. Une fois celle-ci atteinte, le troisième organe 031, du premier dispositif D1, libère le deuxième organe 021 qui libère à son tour le premier organe 011. Le troisième corps C3 est alors libéré et peut se déployer pour rejoindre sa position limite (et finale) matérialisée par les pointillés sur la figure 10B et les traits pleins sur la figure 10C. Le deuxième corps C2 demeure sensiblement immobile dans sa position limite tant que le troisième corps C3 n'a pas atteint sa propre position limite. Une fois celle-ci atteinte, le troisième organe 032, du second dispositif D2, libère le deuxième organe 022 qui libère à son tour le premier organe 012. Le deuxième corps C2 est alors libéré et peut finir de se déployer pour rejoindre sa position finale matérialisée par les pointillés sur la figure 10C (ce qui consiste à revenir légèrement en arrière).

Le séquencement illustré sur les figures 11A à 11C concerne une structure S comprenant un premier corps (ou panneau) fixe C1, un deuxième corps (ou panneau) C2 monté mobile sur le premier corps C1 grâce à une articulation installée sur un premier axe de rotation A1, un troisième corps C3 monté mobile sur le deuxième corps C2 grâce à une articulation installée sur un deuxième axe de rotation A2, sensiblement perpendiculaire au premier axe A1, un quatrième corps C4 monté mobile sur le deuxième corps C2 grâce à une articulation installée sur un troisième axe de rotation A3, sensiblement parallèle au deuxième axe A2, et un cinquième corps C5 monté mobile sur le quatrième corps C4 grâce à une articulation installée sur un quatrième axe de rotation A4, sensiblement parallèle au premier axe A1 et sensiblement perpendiculaire au troisième axe A3. Les premier C1, deuxième C2, troisième C3, quatrième C4 et cinquième C5 corps sont ici initialement sensiblement parallèles entre eux, le troisième corps C3 étant intercalé entre les premier C1 et cinquième C5 corps, le cinquième corps C5 étant intercalé entre les troisième C3 et quatrième C4 corps, et le quatrième corps C4 étant intercalé entre les deuxième C2 et cinquième C5 corps.

Les deuxième C2, troisième C3, quatrième C4 et cinquième C5 corps constituent un premier sous-ensemble E1, et les quatrième C4 et cinquième C5 corps constituent un second sous-ensemble E2.

La structure S est ici équipée de deux dispositifs de séquencement selon l'invention D1 et D2.

Le premier dispositif de séquencement D1 comprend ici, d'une première part, un premier organe O111 (matérialisé par un rectangle noir et par exemple agencé sous la forme d'un doigt), monté sur le troisième corps C3, d'une deuxième part, un autre premier organe O112 (matérialisé par un rectangle noir et par exemple agencé sous la forme d'un doigt), monté sur le quatrième corps C4, d'une troisième part, un deuxième organe O21 (matérialisé par un triangle gris clair et par exemple agencé sous la forme d'un bras), monté sur le deuxième corps C2, et d'une troisième part, un troisième organe O31 (matérialisé par un rond gris foncé et par exemple agencé sous la forme d'une came), monté fixement sur le premier corps C1 au niveau du premier axe de rotation A1.

Le second dispositif de séquencement D2 comprend ici, d'une première part, un premier organe 012 (matérialisé par un rectangle noir et par exemple agencé sous la forme d'un doigt), monté sur le cinquième corps C5, d'une deuxième part, un deuxième organe 022 (matérialisé par un triangle gris clair et par exemple agencé sous la forme d'un bras), monté sur le quatrième corps C4, et d'une troisième part, un troisième organe O32 (matérialisé par un rond gris foncé et par exemple agencé sous la forme d'une came), monté fixement sur le deuxième corps C2 au niveau du troisième axe de rotation A3.

Dans cet exemple, le premier dispositif de séquencement D1 contrôle le déclenchement du déploiement du troisième corps C3 et du second sous-ensemble E2 (C4 et C5), tandis que le second dispositif de séquencement D2 contrôle le déclenchement du déploiement final du cinquième corps C5.

Dans cet exemple, le deuxième corps C2 entraîne dans sa course (ou trajectoire ou cinématique) tout le premier sous-ensemble E1 jusqu'à ce qu'il parvienne dans sa position limite matérialisée en pointillés sur la figure 11A et en traits pleins sur la figure 11B. Une fois celle-ci atteinte, le troisième organe O31, du premier dispositif D1, libère le deuxième organe 021 qui libère à son tour les premiers organes O111 et O112. Le troisième corps C3 et le second sous-ensemble E2 sont alors libérés et peuvent se déployer pour rejoindre leurs positions finales respectives (matérialisées par les pointillés sur la figure 11B et par les traits pleins sur la figure 11C), de part et d'autre du deuxième corps C2. Lorsque le quatrième corps C4 du second sous-ensemble E2 parvient dans sa position finale, qui est également sa position limite, le troisième organe 032, du second dispositif D2, libère le deuxième organe O22 qui libère à son tour le premier organe 012. Le cinquième corps C5 est alors libéré et peut se déployer pour rejoindre sa position finale (matérialisée par les pointillés sur la figure 11C).

Il est important de noter qu'au sein d'une structure déployable selon l'invention, un corps peut être considéré comme fixe vis-à-vis d'un dispositif de séquencement et mobile vis-à-vis d'un autre dispositif de séquencement, en raison du caractère relatif des déplacements des corps les uns par rapport aux autres.

L'invention ne se limite pas aux modes de réalisation de dispositif de séquencement et de structure déployable décrits ci-avant, seulement à titre d'exemple, mais elle englobe toutes les variantes que pourra envisager l'homme de l'art dans le cadre des revendications ci-après.

Ainsi, dans ce qui précède on a décrit, en référence aux figures, des structures déployables dans lesquelles les cinématiques des corps à déployer étaient des rotations pures. Mais, l'invention n'est pas limitée à ce type de cinématique. Elle concerne en effet tout type de cinématique constituée à partir d'au moins une rotation pure et/ou au moins une translation pure.

Par ailleurs, dans ce qui précède on a décrit, en référence aux figures, des structures déployables dans lesquelles le troisième corps était généralement intercalé entre les premier et deuxième corps. Mais cela n'est pas obligatoire. Le troisième corps peut en effet être placé au dessus des (ou contre les, ou encore au voisinage des) premier et deuxième corps, dès lors qu'il est monté à rotation sur l'un d'entre eux.

## Revendications

1. Dispositif de séquencement (D) pour une structure déployable (S) comprenant un premier corps (C1), au moins un deuxième corps (C2) mobile par rapport audit premier corps (C1) et au moins un troisième corps (C3) mobile par rapport à l'un desdits premier (C1) et deuxième (C2) corps et placé, en position au moins partiellement repliée de la structure (S), contre ou entre lesdits premier (C1) et deuxième (C2) corps, **caractérisé en ce qu'**il comprend un premier organe (O1) agencé de manière à être monté fixement sur ledit troisième corps (C3) et propre à interdire son déploiement lorsqu'il est bloqué, et un deuxième organe (O2) agencé de manière à être monté sur ledit deuxième corps (C2) et agencé de manière à bloquer ledit premier organe (O1) tant que ledit deuxième corps (C2) n'a pas effectué une partie choisie d'une cinématique destinée à l'entraîner d'une position initiale vers une position finale ; ledit premier organe (O1) étant agencé sous la forme d'un doigt et ledit deuxième organe (O2) étant agencé sous la forme d'un premier bras comprenant une partie terminale conformée de manière à bloquer ledit doigt (O1) ; ladite partie terminale comportant un axe (B, AT) sensiblement perpendiculaire audit premier bras (O2) et propre à bloquer ledit doigt (O1) ; et ledit dispositif (D) comprenant un troisième organe (O3) agencé de manière à être monté fixe sur ledit premier corps (C1) et à contraindre ledit deuxième organe (O2) à bloquer ledit premier organe (O1) tant que ledit deuxième corps (C2) n'a pas effectué ladite partie de cinématique choisie ; **caractérisé en ce que** ledit troisième organe (O3) est une came de forme choisie de manière à reproduire au moins partiellement ladite partie de cinématique choisie , et **en ce que** ledit axe (AT) comporte des première et seconde portions faisant saillie de part et d'autre de ladite partie terminale du premier bras (O2), ladite première portion étant agencée de manière à bloquer ledit doigt (O1), et ladite seconde portion comprenant une extrémité agencée de manière à glisser le long de ladite came (O3) pendant ladite partie de cinématique choisie.

2. Dispositif de séquencement (D) pour une structure déployable (S) comprenant un premier corps (C1), au moins un deuxième corps (C2) mobile par rapport audit premier corps (C1) et au moins un troisième corps (C3) mobile par rapport à l'un desdits premier (C1) et deuxième (C2) corps et placé, en position au moins partiellement repliée de la structure (S), contre ou entre lesdits premier (C1) et deuxième (C2) corps, **caractérisé en ce qu'**il comprend un premier organe (O1) agencé de manière à être monté fixement sur ledit troisième corps (C3) et propre à interdire son déploiement lorsqu'il est bloqué, et un deuxième organe (O2) agencé de manière à être monté sur ledit deuxième corps (C2) et agencé de manière à bloquer ledit premier organe (O1) tant que ledit deuxième corps (C2) n'a pas effectué une partie choisie d'une cinématique destinée à l'entraîner d'une position initiale vers une position finale ; ledit premier organe (O1) étant agencé sous la forme d'un doigt et ledit deuxième organe (O2) étant agencé sous la forme d'un premier bras comprenant une partie terminale conformée de manière à bloquer ledit doigt (O1), ladite partie terminale comportant un axe (B, AT) sensiblement perpendiculaire audit premier bras (O2) et propre à bloquer ledit doigt (O1) ; et ledit premier corps (C1) comprenant un troisième organe (O3) fixe agencé de manière à être monté fixe sur ledit premier corps (C1) et à contraindre ledit deuxième organe (O2) à bloquer ledit premier organe (O1) tant que ledit deuxième corps (C2) n'a pas effectué ladite partie de cinématique choisie, **caractérisé en ce que** ledit troisième organe (O3) est un second bras muni d'une partie terminale comportant une gorge (G'), et **en ce que** ledit axe (B) est monté à rotation à l'extrémité dudit premier bras (O2) et comporte des première et seconde portions faisant saillie, en position de blocage, de part et d'autre de la partie terminale du premier bras, ladite première portion étant agencée de manière à bloquer ledit doigt (O1) lorsque ladite seconde portion est logée dans ladite gorge (G'), et ladite seconde portion étant agencée de manière à demeurer logée dans la gorge (G') tant que ledit deuxième corps (C2) n'a pas effectué ladite partie de cinématique choisie.

3. Dispositif selon la revendication 1, **caractérisé en ce que** ledit axe (AT) est propre à se translater, sous l'effet d'une force de rappel, sensiblement perpendiculairement audit premier bras (O2) lorsque l'extrémité de sa seconde portion n'est plus au contact de ladite came (O3), de manière à passer d'une première position dans laquelle il bloque ledit doigt (O1) vers une seconde position dans laquelle il libère ledit doigt (O1).

4. Structure déployable (S) comprenant un premier corps (C1), au moins un deuxième corps (C2) mobile par rapport audit premier corps (C1) et au moins un troisième corps (C3) mobile par rapport à l'un desdits premier (C1) et deuxième (C2) corps et placé, en position repliée de la structure, contre ou entre lesdits premier (C1) et deuxième (C2) corps, **caractérisé en ce qu'**il comprend au moins un dispositif de séquencement (D) selon l'une des revendications précédentes.

5. Structure selon la revendication 4, **caractérisée en ce que** ladite partie de cinématique choisie du deuxième corps (C2) est constituée d'au moins une rotation pure sur un secteur angulaire choisi.

6. Structure selon la revendication 4, **caractérisée en ce que** ladite partie de cinématique choisie du deuxième corps (C2) est constituée d'au moins une translation pure sur une distance choisie.

7. Structure selon la revendication 4, **caractérisée en ce que** ladite partie de cinématique choisie du deuxième corps (C2) est une combinaison d'au moins une rotation pure sur un secteur angulaire choisi et/ou d'au moins une translation pure sur une distance choisie.

8. Structure selon l'une des revendications 4 à 7, **caractérisée en ce que** l'un au moins desdits corps (C1-C3) constitue au moins une partie d'une antenne de télécommunications.

9. Structure selon l'une des revendications 4 à 8, **caractérisée en ce que** l'un au moins desdits corps (C1-C3) constitue au moins une partie d'un générateur solaire.

10. Structure selon l'une des revendications 4 à 9, **caractérisée en ce que** l'un au moins desdits corps (C1-C3) constitue au moins une partie d'un dispositif de transfert de chaleur.

## Claims

1. Sequencing device (D) for a deployable structure (S) comprising a first body (C1), at least one second body (C2) mobile relative to said first body (C1), and at least one third body (C3) mobile relative to either said first body (C1) or said second body (C2) and disposed, in an at least partially folded position of the structure (S), against or between said first (C1) and second (C2) bodies, **characterized in that** it comprises a first member (O1) adapted to be fixedly mounted on said third body (C3) and adapted to prevent its deployment when it is immobilized and a second member (O2) adapted to be mounted on said second body (C2) and adapted to immobilize said first member (O1) until said second body (C2) has effected a selected portion of a kinematic adapted to drive it from an initial position to a final position, said first member (O1) taking the form of a finger and said second member (O2) taking the form of a first arm having an end portion conformed to immobilize said finger (01); said end portion comprising a shaft (B, AT) substantially perpendicular to said first arm (O2) and adapted to immobilize said finger (O1); and said device (D) comprising a third member (O3) adapted to be fixedly mounted on said first body (C1) and to constrain said second member (O2) to immobilize said first member (O1) until said second body (C2) has effected said selected portion of said kinematic;
**characterized in that** said third member (O3) is a cam whose shape is selected to reproduce at least in part said selected portion of said kinematic, and **in that** said shaft (AT) has first and second portions projecting on either side of said end portion of the first arm (O2), said first portion being adapted to immobilize said finger (O1) and said second portion having one end adapted to slide along said cam (O3) in the course of said selected portion of said kinematic.

2. Sequencing device (D) for a deployable structure (S) comprising a first body (C1), at least one second body (C2) mobile relative to said first body (C1), and at least one third body (C3) mobile relative to either said first body (C1) or said second body (C2) and disposed, in an at least partially folded position of the structure (S), against or between said first (C1) and second (C2) bodies, **characterized in that** it comprises a first member (O1) adapted to be fixedly mounted on said third body (C3) and adapted to prevent its deployment when it is immobilized and a second member (O2) adapted to be mounted on said second body (C2) and adapted to immobilize said first member (O1) until said second body (C2) has effected a selected portion of a kinematic adapted to drive it from an initial position to a final position, said first member (O1) taking the form of a finger and said second member (O2) taking the form of a first arm having an end portion conformed to immobilize said finger (O1); said end portion comprising a shaft (B, AT) substantially perpendicular to said first arm (O2) and adapted to immobilize said finger (01); and said first body (C1) comprising a fixed third member (O3) adapted to be fixedly mounted on said first body (C1) and to constrain said second member (O2) to immobilize said first member (O1) until said second body (C2) has effected said selected portion of said kinematic, **characterized in that** said third member (O3) is a second arm having an end portion comprising a groove (G'), and **in that** said shaft (B) is mounted to rotate at the end of said first arm (O2) and comprises first and second portions projecting, in an immobilizing position, on either side of the end portion of the first arm, said first portion being adapted to immobilize said finger (O1) when said second portion is accommodated in said groove (G') and said second portion being adapted to remain accommodated in the groove (G') until said second body (C2) has effected said selected kinematic portion.

3. Device according to Claim 1, **characterized in that** said shaft (AT) is adapted to be moved in translation substantially perpendicularly to said first arm (O2) by a return force when the end of its second portion is no longer in contact with said cam (03), so as to move from a first position in which it immobilizes said finger (O1) to a second position in which it releases said finger (O1).

4. Deployable structure (S) comprising a first body (C1), at least one second body (C2) mobile relative to said first body (C1), and at least one third body (C3) mobile relative to either said first body (C1) or said second body (C2) and disposed, in a folded position of the structure, against or between said first body (C1) and said second body (C2), which deployable structure is **characterized in that** it comprises at least one sequencing device (D) as claimed in any preceding claim.

5. Structure according to Claim 4, **characterized in that** said selected portion of said kinematic of the second body (C2) comprises at least one pure rotation over a selected angular sector.

6. Structure according to Claim 4, **characterized in that** said selected portion of said kinematic of the second body (C2) comprises at least one movement in pure translation over a selected distance.

7. Structure according to Claim 4, **characterized in that** said selected portion of said kinematic of the second body (C2) is a combination of at least one pure rotation over a selected angular sector and/or at least one movement in pure translation over a selected distance.

8. Structure according to one of Claims 4 to 7, **characterized in that** at least one of said bodies (C1-C3) constitutes at least a portion of a telecommunications antenna.

9. Structure according to one of Claims 4 to 8, **characterized in that** at least one of said bodies (C1-C3) constitutes at least a portion of a solar generator.

10. Structure according to one of Claims 4 to 9, **characterized in that** at least one of said bodies (C1-C3) constitutes at least a portion of a heat transfer device.

## Patentansprüche

1. Folgesteuerungsvorrichtung (D) für eine entfaltbare Struktur (S), die einen ersten Körper (C1), mindestens einen zweiten Körper (C2), der in Bezug zu dem ersten Körper (C1) bewegbar ist, und mindestens einen dritten Körper (C3), der in Bezug zu dem ersten Körper (C1) oder dem zweiten Körper (C2) bewegbar ist und in zumindest teilweise zurückgefalteter Position der Struktur (S) gegen oder zwischen den ersten Körper (C1) und zweiten Körper (C2) platziert ist, aufweist, **dadurch gekennzeichnet, dass** sie ein erstes Organ (O1) aufweist, das derart eingerichtet ist, dass es stationär auf dem dritten Körper (C3) montiert ist und sein Entfalten unterbinden kann, wenn es blockiert ist, und ein zweites Organ (02), das derart eingerichtet ist, dass es auf dem zweiten Körper (C2) montiert und derart eingerichtet ist, dass es das erste Organ (O1) blockiert, solange der zweite Körper (C2) einen ausgewählten Teil einer Kinematik nicht ausgeführt hat, der dazu bestimmt ist, ihn von einer ursprünglichen Position zu einer Endposition mitzunehmen; wobei das erste Organ (O1) in der Form eines Fingers eingerichtet ist, und das zweite Organ (O2) in der Form eines ersten Arms eingerichtet ist, der einen Endteil aufweist, der derart ausgebildet ist, dass er den Finger (O1) blockiert; wobei der Endteil eine Achse (B, AT) aufweist, die zu dem ersten Arm (O2) im Wesentlichen senkrecht ist und den Finger (O1) blockieren kann; und wobei die Vorrichtung (D) ein drittes Organ (O3) aufweist, das derart eingerichtet ist, dass es auf dem ersten Körper (C1) stationär montiert ist und das zweite Organ (O2) zwingt, das erste Organ (O1) solange zu blockieren, wie der zweite Körper (C2) einen ausgewählten Kinematikteil nicht ausgeführt hat; **dadurch gekennzeichnet, dass** das dritte Organ (O3) eine Nocke mit einer Form ist, die derart ausgewählt ist, dass der ausgewählte Kinematikteil zumindest teilweise nachvollzogen wird, und dass die Achse (AT) einen ersten und einen zweiten Abschnitt aufweist, die zu beiden Seiten des Endteils des ersten Arms (O2) vorstehen, wobei der erste Abschnitt derart eingerichtet ist, dass er den Finger (O1) blockiert, und wobei der zweite Abschnitt ein Ende aufweist, das derart eingerichtet ist, dass es entlang der Nocke (O3) während des ausgewählten Teils der Kinematik geleitet.

2. Folgesteuerungsvorrichtung (D) für eine entfaltbare Struktur (S), die einen ersten Körper (C1), mindestens einen zweiten Körper (C2), der in Bezug zu dem ersten Körper (C1) bewegbar ist, und mindestens einen dritten Körper (C3), der in Bezug zu dem ersten Körper (C1) oder dem zweiten Körper (C2) bewegbar ist und in zumindest teilweise zurückgefalteter Position der Struktur (S) gegen oder zwischen den ersten Körper (C1) und den zweiten Körper (C2) platziert ist, aufweist, **dadurch gekennzeichnet, dass** sie ein erstes Organ (O1) aufweist, das derart eingerichtet ist, dass es stationär auf dem dritten Körper (C3) montiert ist und sein Entfalten unterbinden kann, wenn es blockiert ist, und ein zweites Organ (02), das derart eingerichtet ist, dass es auf dem zweiten Körper (C2) montiert und derart eingerichtet ist, dass es das erste Organ (O1) blockiert, solange der zweite Körper (C2) einen ausgewählten Kinematikteil nicht ausgeführt hat, der dazu bestimmt ist, ihn von einer ursprünglichen Position zu einer Endposition mitzunehmen; wobei das erste Organ (O1) in der Form eines Fingers eingerichtet ist und das zweite Organ (O2) in der Form eines ersten Arms eingerichtet ist, der einen Endteil aufweist, der derart ausgebildet ist, dass er den Finger (O1) blockiert, wobei der Endteil eine Achse (B, AT) aufweist, die zu dem ersten Arm (O2) im Wesentlichen senkrecht ist und den Finger (O1) blockieren kann; und wobei der erste Körper (C1) ein stationäres drittes Organ (O3) aufweist, das derart eingerichtet ist, dass es auf dem ersten Körper (C1) stationär montiert ist und das zweite Organ (O2) zwingt, das erste Organ (O1) solange zu blockieren, wie der zweite Körper (C2) den ausgewählten Kinematikteil nicht ausgeführt hat, **dadurch gekennzeichnet, dass** das dritte Organ (O3) ein zweiter Arm ist, der mit einem Endteil versehen ist, der eine Hohlkehle (G') aufweist, und dass die Achse (B) in Drehung am Ende des ersten Arms (O2) montiert ist und einen ersten und einen zweiten Abschnitt aufweist, die in Blockierposition zu beiden Seiten des Endteils des ersten Arms vorstehen, wobei der erste Abschnitt derart eingerichtet ist, dass er den Finger (O1) blockiert, wenn der zweite Abschnitt in der Hohlkehle (G') untergebracht ist, und wobei der zweite Abschnitt derart eingerichtet ist, dass er in der Hohlkehle (G') untergebracht bleibt, solange der zweite Körper (C2) den ausgewählten Kinematikteil nicht ausgeführt hat.

3. Vorrichtung nach Anspruch 1, **dadurch gekennzeichnet, dass** sich die Achse (AT) unter der Einwirkung einer Rückholkraft im Wesentlichen senkrecht zu dem ersten Arm (O2) verschieben kann, wenn das Ende des zweiten Abschnitts nicht mehr mit der Nocke (O3) in Berührung ist, um von einer ersten Position, in der er den Finger (O1) blockiert, zu einer zweiten Position, in der er den Finger (O1) freigibt, überzugehen.

4. Entfaltbare Struktur (S), die einen ersten Körper (C1), mindestens einen zweiten Körper (C2), der in Bezug zu dem ersten Körper (C1) bewegbar ist, und mindestens einen dritten Körper (C3), der in Bezug zu dem ersten Körper (C1) oder dem zweiten Körper (C2) bewegbar ist und in zurückgefalteter Position der Struktur gegen oder zwischen dem ersten Körper (C1) und dem zweiten Körper (C2) platziert ist, aufweist, **dadurch gekennzeichnet, dass** sie mindestens eine Folgesteuerungsvorrichtung (D) nach einem der vorhergehenden Ansprüche aufweist.

5. Struktur nach Anspruch 4, **dadurch gekennzeichnet, dass** der ausgewählte Kinematikteil des zweiten Körpers (C2) aus mindestens einer reinen Drehung auf einem ausgewählten Winkelsektor besteht.

6. Struktur nach Anspruch 4, **dadurch gekennzeichnet, dass** der ausgewählte Kinematikteil des zweiten Körpers (C2) aus mindestens einer reinen Verschiebung über eine ausgewählte Entfernung besteht.

7. Struktur nach Anspruch 4, **dadurch gekennzeichnet, dass** der ausgewählte Kinematikteil des zweiten Körpers (C2) eine Kombination aus mindestens einer reinen Drehung auf einem ausgewählten Winkelsektor und/oder mindestens einer reinen Verschiebung über eine ausgewählte Entfernung ist.

8. Struktur nach einem der Ansprüche 4 bis 7, **dadurch gekennzeichnet, dass** mindestens einer der Körper (C1-C3) mindestens einen Teil einer Telekommunikationsantenne bildet.

9. Struktur nach einem der Ansprüche 4 bis 8, **dadurch gekennzeichnet, dass** mindestens einer der Körper (C1-C3) mindestens einen Teil eines Solargenerators bildet.

10. Struktur nach einem der Ansprüche 4 bis 9, **dadurch gekennzeichnet, dass** mindestens einer der Körper (C1-C3) mindestens einen Teil einer Wärmeübertragungsvorrichtung bildet.
